(19) Europäisches Patentamt
European Patent Office
Office européen des brevets

(11) **EP 2 554 438 A1**

## (12) EUROPEAN PATENT APPLICATION
published in accordance with Art. 153(4) EPC

(43) Date of publication:
**06.02.2013 Bulletin 2013/06**

(21) Application number: **11762723.2**

(22) Date of filing: **25.03.2011**

(51) Int Cl.:
***B60R 19/03*** *(2006.01)*   ***B60J 5/00*** *(2006.01)*
***B60R 19/04*** *(2006.01)*   ***B62D 29/00*** *(2006.01)*

(86) International application number:
**PCT/JP2011/057448**

(87) International publication number:
**WO 2011/122492 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2010 JP 2010076665**

(71) Applicant: **Kabushiki Kaisha Kobe Seiko Sho
Kobe-shi, Hyogo 651-8585 (JP)**

(72) Inventors:
  • **KINEFUCHI Masao
    Hyogo 651-2271 (JP)**
  • **NAKAGAWA Tomokazu
    Hyogo 651-2271 (JP)**
  • **TACHIBANA Mie
    Hyogo 651-2271 (JP)**

(74) Representative: **Müller-Boré & Partner
Patentanwälte
Grafinger Straße 2
81671 München (DE)**

(54) **VEHICLE COMPONENT**

(57)   An automobile component to which an eccentric compressive load is applied becomes lighter without deteriorating performance. Density $\rho$, sheet thickness t, Young's modulus E, and yield stress $\sigma y$ of a material composing an inner panel 3, and a width B of a flange 3a in the automobile component 1 equipped with an outer panel 2 and the inner panel 3 including the flange 3a projecting to an outer side in the center, satisfy the following formulae (1), (2) and (3).

$$\rho \times t \leq 15.0 \ (\mathrm{kg/m^2}) \ ...(1)$$

$$(B/t)\sqrt{\sigma y / E} \leq 1.5 \ ...(2)$$

$$E \times t^2 \times \sigma y \geq 380 \ (\mathrm{kN^2/mm^2}) \ ...(3)$$

FIG.1

**Description**

[Technical Field]

The present invention relates to an automobile component such as a bumper beam, door beam, frame member and the like.

[Background Art]

In skeletal members of an automobile, there are a component deformed against the impact force in a vehicle collision and absorbing energy and a component for securing strength/rigidity in order to prevent deformation of a vehicle body. These are designed so as to secure required performance against various impact loads such as an axial load, bending load, torsional load and the like.

Patent Literature 1 discloses a belt line reinforcement structure of a vehicle door. Here, by joining an outer reinforcement and an inner reinforcement, a belt line reinforcement having a single closed cross section is formed. By formation of first and second closed cross sections extending over the entire length in the front-back direction of a door body by this belt line reinforcement and a door inner panel, rigidity of the door member against the impact force in a vehicle collision is improved.

In this structure, in order that a door is not greatly deformed even when the door receives an impact force from the front, strength against an impact load applied in the longitudinal direction (axial load) is required. In addition, in order that the deformed door does not enter the inside of a cabin even when the door is deformed by the impact load, it is required that the door is folded to the vehicle body outer side. Therefore, in the structure, in order to control the direction of folding, by decentering the point of application of the load to the cabin side from the center of the cross section of the member, an eccentric bending load is made to apply to the member along with the axial load. Because bending compressive stress is generated on the vehicle body inner side with the configuration, the inner side bears higher compressive stress than that the outer side does, and the door is deformed so as to project to the vehicle body outer side.

Also, Patent Literature 2 discloses a belt line section structure of an automobile. Here, in a section of a rear vertical wall of a pillar outer of a front pillar opposing a belt line reinforcement, a swelled out part that projects to the door body side above the other general surface is formed. Thus, the belt line reinforcement is surely stuck into the pillar member in a vehicle collision. With this structure, the collision load from the front is surely transmitted to the belt line reinforcement.

Thus, to a component in which the direction of deformation is also controlled along with the strength, a compressive force and bending moment are applied simultaneously unlike in the case of a simple axial crush component (a front side member and the like) and a bending crush component (a bumper, an impact beam). Therefore, a design peculiar to the component has been devised.

Patent Literature 3 discloses a vehicle door and a panel member load absorbing structure. Here, when a pressing part that has abutted on a load absorbing part further presses the load absorbing part, the load absorbing part is deformed so that a panel side ridge line part moves to the other side along the thickness direction of an inner panel body. Thus, the load along the vehicle width direction is absorbed, and rigidity against an external force along the vehicle front-back direction is secured and improved.

Also, Patent Literature 4 discloses a vehicle body side face structure. Here, the sheet thickness of an inner panel is thicker than the sheet thickness of an outer panel, and, in an inner side swelled out part, a projection is arranged which is positioned on the outer side in the vehicle width direction from the bending neutral axis of a closed cross section part. Thus, deformation is suppressed against both the loads in the vehicle width direction and the vehicle front-back direction.

Normally, these components are assembled by spot-welding of thin steel sheets that were press-formed. For example, a door shoulder reinforcement is usually formed of steel sheets with 1-2 mm thickness, and has a shape similar to that of a double hat shaped material. In particular, when it is required to bear a large load, steel sheets with approximately 2 mm thickness are used.

However, from the necessity of $CO_2$ reduction/vehicle weight reduction in recent years, automobile components of lighter weight and higher performance are desired. Therefore, in addition to the device on the cross-sectional shape of a steel sheet, the measures for reducing the weight from a new viewpoint have been adopted.

Patent Literature 5 discloses an impact absorbing member for an automobile whose energy absorbing amount has been increased. Here, by applying a light-weight and high-strength CFRP material to a beam material that receives impact, the weight has been reduced and the energy absorbing amount has been increased.

Also, Patent Literature 6 discloses a bending strength member. Here, an FRP material is provided on a flange surface that comes to the tension side when a bending load is applied, and a ratio of the width b and the thickness t (b/t) of a flange that comes to the compression side when a bending load is applied is set to 12 or less. Thus, even when a bending load of collision and the like increases, the energy absorbing amount is increased.

Also, Patent Literature 7 discloses a composite structural member for a vehicle. Here, a reinforcement tube made of a light alloy or made of a synthetic resin is inserted into a thin steel pipe with a closed cross section. The reinforcement tube has an external shape generally lining the inner wall of the steel pipe, and ribs are formed inside. Thus, sufficient strength that stands for a long time and weight reduction have been achieved.

Also, Patent Literature 8 discloses a bumper beam for an automobile. Here, steel sheets are stuck to a front side flange and a rear side flange of an aluminum shape from the outer side. With the yield stress $\sigma y1$ of the steel sheets, the specific gravity $\rho1$ of the steel sheets, the yield stress $\sigma y2$ of the aluminum shapes, and the specific gravity p2 of the aluminum shapes satisfying the relation of $\sigma y1/\rho1 > \sigma y2/\rho2$, bending strength has been improved while suppressing increase in weight to a minimum.

Also, Patent Literature 9 discloses a bumper structure. Here, to a bumper body made of a metal, a first reinforce sheet made of a metal is attached. Also, the Young's modulus Est of the bumper body, the density pst of the bumper body, the Young's modulus E2 of the first reinforce sheet and the density $\rho2$ of the first reinforce sheet satisfy the relation of $(Est/\rho st^3) < (E2/\rho2^3)$. Thus, bending strength has been improved while suppressing increase in weight to a minimum.

[Citation List]

[Patent Literature]

[Patent Literature 1]    JP-A No. 2002-219938
[Patent Literature 2]    JP-A No. 2006-88885
[Patent Literature 3]    JP-A No. 2008-94353
[Patent Literature 4]    JP-A No. 2007-216788
[Patent Literature 5]    JP-A No. 2005-225364
[Patent Literature 6]    JP-A No. 2003-129611
[Patent Literature 7]    JP-A No. 2003-312404
[Patent Literature 8]    JP-A No. 2009-184415
[Patent Literature 9]    JP-A No. 2009-255900

[Summary of Invention]

[Technical Problems]

In the meantime, in an automobile component having an outer panel and an inner panel whose both ends are respectively joined to each other, there is a case that an eccentric compressive load decentered to the inner panel side from the center of the cross section is applied. As factors to determine the strength of such automobile component, buckling on the bending compression side (inner panel), yield of the inner panel, and yield on the bending tension side (outer panel) are assumed. That is, because a bending moment by the eccentric load is applied to such automobile component in addition to a compressive load, a compressive stress is applied to the inner panel, and a tensile stress is applied to the outer panel. Because an absolute value of the compressive stress is greater than an absolute value of the tensile stress, when the inner panel and the outer panel are formed of same material/sheet thickness, the influence of the compressive stress applied to the inner panel is greater. Therefore, the strength of the automobile component is determined by buckling of the inner panel or yield of the inner panel.

Accordingly, it is desired that the weight of the automobile component to which an eccentric compressive load is applied is reduced without deteriorating the performance.

The object of the present invention is to reduce the weight of the automobile component to which an eccentric compressive load is applied without deteriorating the performance.

[Solution to Problem]

The automobile component in the present invention is an automobile component including an outer panel and an inner panel joined to each other at respective both ends, in which
the outer panel is composed of an iron and steel material,
the inner panel includes a flange projecting to an outer side in the center, and
density $\rho$, sheet thickness t, Young's modulus E, and yield stress $\sigma y$ of a material composing the inner panel, and width B of the flange of the inner panel satisfy formulae (1), (2) and (3) below.

$$\rho \times t \leq 15.0 \ (kg/m^2) \ ...(1)$$

$$(B/t)\sqrt{\sigma y/E} \leq 1.5 \ ...(2)$$

$$E \times t^2 \times \sigma y \geq 380 \ (kN^2/mm^2) \ ...(3)$$

According to the constitution, when an eccentric compressive load decentered to the inner panel side from the center of the cross section of the automobile component is applied to the automobile component, a tensile stress is applied to the outer panel which is on the bending tension side, and a compressive stress is applied to the inner panel which is on the bending compression side. At this time, the strength of the automobile component is determined by buckling of the inner panel or yield of the inner panel. According to the present invention, because the material composing the inner panel satisfies all of the three formulae (1), (2) and (3), the weight of the automobile component is not increased, and the performance of the automobile component becomes equal to or better than that of the case the outer panel and the inner panel are manufactured of a same steel sheet. That is, the inner panel becomes hard to buckle, and drop of the maximum load due to yield of the inner panel is suppressed. Accordingly, the weight of the automobile component can be reduced without deteriorating the performance when an eccentric compressive load is applied to the automobile component.

Also, in the automobile component in the present invention, the material composing the inner panel may be an aluminum alloy of 5000 series, 6000 series or 7000 series. According to the constitution, the weight of the inner panel can be reduced without deteriorating the performance.

[Advantageous Effects of Invention]

According to the automobile component of the present invention, because the material composing the inner panel satisfies all of the three formulae (1), (2) and (3), the inner panel becomes hard to buckle and drop of the maximum load due to yield of the inner panel is suppressed without increasing the weight of the automobile component. Accordingly, in the present invention, the weight of the automobile component to which an eccentric compressive load decentered to the inner panel side from the center of the cross section of the automobile component is applied can be reduced without deteriorating the performance.

[Brief Description of Drawings]

[Fig. 1] Fig. 1 is a schematic cross-sectional view showing an automobile component of the present invention.
[Fig. 2] Fig. 2 is a schematic cross-sectional view showing an automobile component used in an analysis in the example.
[Fig. 3] Fig. 3 is a graph showing the relation between buckling parameter and the maximum load.
[Fig. 4] Fig. 4 is a graph showing the relation between variation of the value of $(E \times t^2 \times \sigma y)$ and the rate of change of the maximum load.

[Description of Embodiment]

A preferred embodiment of the present invention will be described below referring to the drawings.

(Constitution of automobile component)

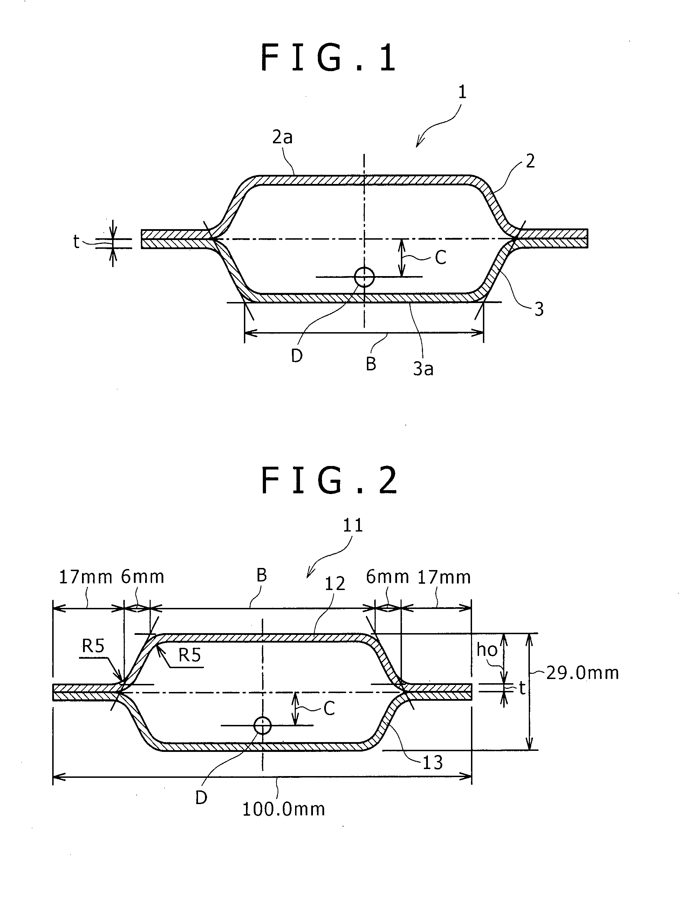

An automobile component 1 by the present embodiment is a bumper beam, door beam, frame member and the like, and includes an outer panel 2 arranged on the vehicle outer side and an inner panel 3 arranged on the vehicle inner side as shown in Fig. 1. The outer panel 2 and the inner panel 3 are joined to each other at respective both ends. The outer panel 2 is formed of an iron and steel material, and includes a flange 2a projecting to the outer side of the vehicle at the center. The inner panel 3 is composed of an aluminum alloy of 5000 series, 6000 series or 7000 series, and includes a flange 3a projecting to the inner side of the vehicle at the center.

When an eccentric compressive load D decentered to the inner panel 3 side by a distance C from the center of the cross section of the automobile component 1 is applied to the automobile component 1, the outer panel 2 comes to the bending tension side and the inner panel 3 comes to the bending compression side. A tensile stress is applied to the outer panel 2 that is on the bending tension side, and a compressive stress is applied to the inner panel 3 that is on the bending compression side.

When the cross-sectional shape of the automobile component 1 does not change, the weight of the outer panel 2 and the inner panel 3 is proportional to the product of the sheet thickness t times the density p. Here, the density and sheet thickness of an iron and steel material when the inner panel 3 is formed of the iron and steel material are made $\rho 1$ and t1 respectively. Also, the density and sheet thickness of an aluminum alloy when the inner panel 3 is formed of the aluminum alloy of 5000 series, 6000 series or 7000 series are made p2 and t2 respectively. At this time, said $\rho 1$, t1, p2 and t2 satisfy the formula (4) below.

$$\rho 1 \times t1 \geq \rho 2 \times t2 \ ...(4)$$

In other words, the weight of the inner panel 3 when the inner panel 3 is composed of an aluminum alloy is the weight of the inner panel 3 or less when the inner panel 3 is composed of an iron and steel material. Thus, by composing the inner panel 3 of an aluminum alloy, increase of the weight of the automobile component 1 is suppressed.

Here, the sheet thickness, Young's modulus, and yield stress of the aluminum alloy of 5000 series, 6000 series or 7000 series composing the inner panel 3 are made t, E and $\sigma y$ respectively. Also, the flange width of the outer panel 2 and the inner panel 3 is made B. At this time, said t, E, $\sigma y$ and B satisfy the formula (5) below.

$$(B/t)\sqrt{\sigma y/E} \leq 1.5 \ ...(5)$$

Here, the value $(B/t)\sqrt{\sigma y/E}$ is a buckling parameter generally used in the field of steel structure. Also, when the cross-sectional shape of the automobile component 1 does not change, B is constant. When the eccentric compressive load D described above is applied to the automobile component 1, the maximum load is determined by yield of the inner panel 3 that comes to the bending compression side. When the value of the buckling parameter described above is 1.5 or less, the maximum load becomes 90% or more of the theoretical analysis result, and therefore the inner panel 3 hardly buckles.

Here, the sheet thickness, Young's modulus, cross-sectional area, and yield stress of an iron and steel material when the inner panel 3 is composed of the iron and steel material are made t1, E1, A1 and $\sigma y1$ respectively. Also, the sheet thickness, Young's modulus, cross-sectional area, and yield stress of an aluminum alloy when the inner panel 3 is composed of the aluminum alloy of 5000 series, 6000 series or 7000 series are made t2, E2, A2 and $\sigma y2$ respectively. At this time, t1, E1, A1, $\sigma y1$, t2, E2, A2 and $\sigma y2$ satisfy the formula (6) below.

$$(E2 \cdot A2) \times (t2 \cdot \sigma y2) \geq 0.9 \times (E1 \cdot A1) \times (t1 \cdot \sigma y1) \ ...(6)$$

Here, when the cross-sectional shape of the automobile component 1 is not changed, the representative values of the cross-sectional area A1, A2 are the sheet thickness t1, t2, and therefore the formula (6) above can be replaced with the formula (7) below.

$$E2 \times t2^2 \times \sigma y2 \geq 0.9 \times E1 \times t1^2 \times \sigma y1 \ ...(7)$$

The factors in determining the maximum load by yield of the inner panel 3 are the yield strength of the inner panel 3 and the bending rigidity of the automobile component 1. When the cross-sectional shape of the automobile component 1 does not change, the representative value of the strength of the inner panel 3 is the product of the sheet thickness t2 times the yield stress σy2. Also, contribution to the bending rigidity of the automobile component 1 accompanying change of the material and change of the sheet thickness of the inner panel 3 is expressed by the product of the Young's modulus E2 times the cross-sectional area A2. Further, as described above, when the cross-sectional shape is not changed, the representative value of the cross-sectional area A is the sheet thickness t, and therefore contribution to the bending rigidity of the automobile component 1 accompanying change of the material and change of the sheet thickness of the inner panel 3 is expressed by the product of the Young's modulus E times the sheet thickness t. By satisfying the formula (7), the maximum load of the automobile component 1 becomes 90% or more, and drop of the maximum load due to yield of the inner panel 3 is suppressed. Also, the practical upper limit value of $E2 \times t2^2 \times \sigma y2$ is approximately 3 times of $E1 \times t1^2 \times \sigma y1$.

When an eccentric compressive load decentered to the inner panel 3 side from the center of the cross section of the automobile component 1 is applied to the automobile component 1, the strength of the automobile component 1 is determined by buckling of the inner panel 3 or yield of the inner panel 3. At this time, because the material composing the inner panel 3 satisfies all of three relations of formulae (4), (5) and (7), the weight of the automobile component 1 is not increased, and the performance of the automobile component becomes equal to or better than that of the case the outer panel 2 and the inner panel 3 are manufactured of the same steel sheet.
That is, the inner panel 3 becomes hard to buckle, and drop of the maximum load due to yield of the inner panel 3 is suppressed. Accordingly, the weight of the automobile component 1 can be reduced without deteriorating the performance even when an eccentric compressive load is applied to the automobile component 1.

Also, because the material composing the inner panel 3 is an aluminum alloy of 5000 series, 6000 series or 7000 series, the weight of the inner panel 3 can be reduced without deteriorating the performance.

Further, the size of the cross section of the automobile component to which the requirement described above can be applied is approximately 100 mm×100 mm normally, and is 200 mm×200 mm at a maximum. Also, the length of the automobile component is normally approximately 1 m or less than that, and is approximately 2 m at a maximum.

(Analysis)

Using an automobile component 11 shown in Fig. 2 and applying an eccentric compressive load D decentered to the inner panel 13 side from the center of the cross section by the distance C=8 mm, a theoretical analysis by strength of materials (stress calculation superposing compressive force and bending moment generated by eccentricity) and a finite element method (FEM) analysis were conducted. Here, the length in the depth direction of the automobile component 11 is 900 mm, the cross section width is 100 mm, and the cross section height is 29 mm. Also, in Fig. 2, R5 means that the radius of curvature is 5 mm. The automobile component 11 includes an outer panel 12 and an inner panel 13 whose both ends are respectively joined to each other, and the flange width B of the outer panel 12 and the inner panel 13 is 54 mm respectively. Also, for the outer panel 12 of the automobile component 11, a 590 MPa class cold rolled steel sheet with 2.0 mm sheet thickness t is used. Further, it was assumed that the cross-sectional shape of the automobile component 11 was constant, and the cross-sectional shape did not change in the width direction. As a result, the result of the theoretical analysis and the result of the FEM analysis generally agreed to each other, and it was known that the maximum load was determined by yield of the inner panel 13 under the condition.

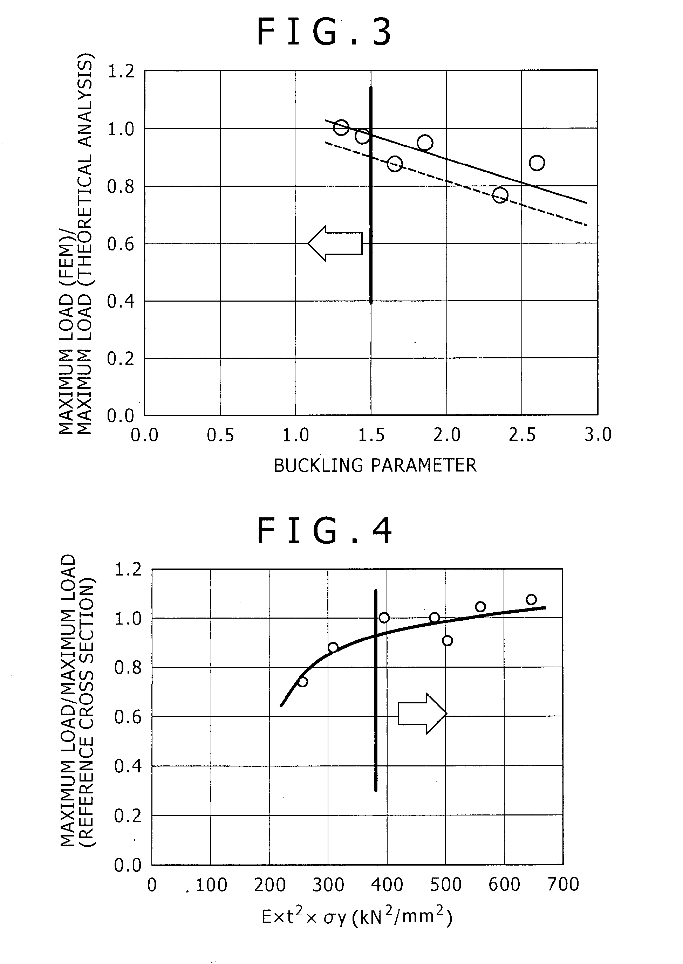

Therefore, in order to confirm the limit of buckling, the theoretical analysis and the FEM analysis were conducted with the cross section having a reduced thickness assuming the materials of two kinds of iron and steel materials without changing the shape. Further, by comparing the result of the theoretical analysis (the maximum load determined by yield of the inner panel 13) and the result of the FEM analysis, the rate of drop of the strength by buckling was confirmed. Fig. 3 shows the result. Fig. 3 shows the effect of buckling on the maximum load.

In Fig. 3, the buckling parameter of the abscissa is the value $(B/t)\sqrt{\sigma y/E}$ generally used in the field of steel structure. Here, the result obtained with B=54 mm, t=1.2-2.0 mm, σy=480, 780MPa, and E=205,800 MPa (Young's modulus of steel) was used. According to it, as the value of the buckling parameter increases, the maximum load obtained in the FEM analysis becomes less than the maximum load obtained in the theoretical analysis. That is, due to buckling of the inner panel 13, the maximum load dropped from the performance provided to the cross section. In considering variation of the result (shown in a dotted line in Fig. 3), it is known that the maximum load can be made 90% or more of the result of the theoretical analysis by making the value of the buckling parameter 1.5 or less as shown in the formula (5) above.

Also, the factors in determining the maximum load by yield of the inner panel 13 are the yield strength of the inner panel 13 and the bending rigidity of the automobile component 11. The latter exerts a great effect on the magnitude of the bending compressive stress generated by the bending moment caused by eccentricity. When there is no change in the shape of the automobile component 11, the representative value of the strength of the inner panel 13 is the product of the sheet thickness t times the yield stress σy2. Also, because the bending rigidity of the automobile component 11 is given by the product of the Young's modulus E times the polar moment of inertia of area, when the inner panel 13 and the outer panel 12 are expressed separately, the function of the formula (8) below is obtained.

$$\text{Bending rigidity} \propto f(Eo \times Ao \times (ho)^2, Ei \times Ai \times (hi)^2) \dots (8)$$

Here, Eo expresses the Young's modulus of the outer panel 12, Ei expresses the Young's modulus of the inner panel 13, ho expresses the cross section height of the outer panel 12, hi expresses the cross section height of the inner panel 13, Ao expresses the cross-sectional area of the outer panel 12, and Ai expresses the cross-sectional area of the inner panel 13. Also, in Fig. 2, the cross section height ho of the outer panel 12 is 12.5 mm. Accordingly, when the cross-sectional shape is not changed, contribution to the bending rigidity of the automobile component 11 accompanying change of the material and change of the sheet thickness of the inner panel 13 is expressed by the product of the Young's modulus E times the cross-sectional area A. Also, as described above, when the cross-sectional shape is not changed, because the representative value of the cross-sectional area A is the sheet thickness t, contribution to the bending rigidity of the automobile component 11 accompanying change of the material and change of the sheet thickness of the inner panel 13 is expressed by the product of the Young's modulus E times the sheet thickness t.

Using two factors described above, comparative examples 1-7 and examples 1-4 having the inner panels 13 composed of various materials shown in Table 1 were manufactured, and the maximum load of each was calculated. Table 1 shows the result of them. Also, the 590 MPa class steel sheet of the comparative example 1 is the reference cross section in comparing the maximum load.

[Table 1]

| | Material | Young's modulus E (MPa) | Density ρ (kg/m³) | Yield stress σy (MPa) | Sheet thickness t (mm) | Member weight (kg/m) | ρ × t (kg/m²) | (B/t)√(σy/E) | E × t² × σy (kN²/mm²) | Maximum load (kN) |
|---|---|---|---|---|---|---|---|---|---|---|
| Comparative example 1 | 590MPa class steel sheet | 205800 | 7.8 | 480 | 2.0 | 3.5 | 15.6 | 1.30 | 395 | 55 |
| Comparative example 2 | 980MPa class steel sheet | 205800 | 7.8 | 800 | 1.4 | 3.0 | 10.9 | 2.40 | 323 | 42 |
| Comparative example 3 | 980MPa class steel sheet | 205800 | 7.8 | 800 | 1.6 | 3.1 | 12.5 | 2.10 | 421 | 47 |
| Example 1 | 5000 series aluminum alloy | 68600 | 2.7 | 230 | 5.0 | 3.2 | 13.5 | 0.63 | 394 | 52 |
| Comparative example 4 | 6000 series aluminum alloy | 68600 | 2.7 | 150 | 5.0 | 3.2 | 13.5 | 0.51 | 257 | 41 |
| Comparative example 5 | 6000 series aluminum alloy | 68600 | 2.7 | 150 | 7.0 | 3.7 | 18.9 | 0.36 | 504 | 51 |
| Comparative example 6 | 6000 series aluminum alloy | 68600 | 2.7 | 280 | 4.0 | 2.9 | 10.8 | 0.86 | 307 | 48 |
| Example 2 | 6000 series aluminum alloy | 68600 | 2.7 | 280 | 5.0 | 3.2 | 13.5 | 0.69 | 480 | 56 |
| Example 3 | 6000 series aluminum alloy | 68600 | 2.7 | 280 | 5.4 | 3.3 | 14.6 | 0.64 | 560 | 58 |
| Comparative example 7 | 7000 series aluminum alloy | 68600 | 2.7 | 360 | 2.0 | 2.3 | 5.4 | 1.96 | 99 | 27 |
| Example 4 | 7000 series aluminum alloy | 68600 | 2.7 | 360 | 4.0 | 2.9 | 10.8 | 0.98 | 395 | 53 |

Fig. 4 shows the relation between variation of the value of ($E{\times}t^2{\times}\sigma y$) and the rate of change of the maximum load when the material of the inner panel 13 is substituted. The maximum load when the value of ($E{\times}t^2{\times}\sigma y$) of the abscissa is 380 kN²/mm² or more becomes 90% or more of that of the comparative example 1 (reference cross section).

Accordingly, it is known that, when the material of the inner panel 13 satisfies the formula (7) above, the maximum load of 90% or more of that of the automobile components of prior arts composed only of steel sheets can be obtained.

In the comparative examples 2, 3, 7, the value of the buckling parameter $\left((B/t)\sqrt{\sigma y/E}\right)$ was 1.5 or more, and the inner panel 13 was liable to buckle. In the comparative examples 4, 6, the value of $E \times t^2 \times \sigma y$ was less than 380 $kN^2/mm^2$, and drop of the maximum load due to yield of the inner panel 13 was large. In the comparative example 5, the weight increased than that of the reference cross section. On the other hand, in the examples 1-4, because all of the formulae (4), (5) and (7) were satisfied, the weight was lighter than that of the reference cross section, buckling hardly occurred, and drop of the maximum load due to yield of the inner panel 13 was suppressed.

Here, the analysis described above was conducted assuming the sheet thickness t=2.0 mm. When the inner panel 13 is manufactured of steel, it is common that the sheet thickness t=approximately 2 mm. In this case, when $\rho 1 \times t1$ is calculated assuming the density $\rho 1$=7.8 kg/m$^3$ and the sheet thickness t=2.0 mm of the iron and steel material in the formula (4) above, the value becomes 15.6 kg/m$^2$ as shown in the comparative example 1 of Fig. 1. In considering this value, with the density $\rho$ and the sheet thickness t of the material adopted by the inner panel 13 side satisfying $\rho \times t \leq 15.0$ (kg/m$^2$), the weight is not increased even when the material of the inner panel 13 is substituted for the steel sheet.

Also, in a similar manner, in considering that t=approximately 2 mm of the sheet thickness is common when the inner panel 13 is manufactured of steel, the calculation result of the right-hand side of the formula (7) becomes 395 N$^2$/m$^2$ as shown in the comparative example 1 of Table 1 likewise. In considering this value, with the Young's modulus E, the sheet thickness t, and the yield stress $\sigma y$ of the material adopted by the inner panel 13 side satisfying $E \times t^2 \times \sigma y \geq 380$ (kN$^2$/mm$^2$), the maximum load of a level generally similar to that of the steel sheet (90% or more) can be obtained even when the material of the inner panel 13 is substituted.

(Modification of the present embodiment)

Although the embodiments of the present invention were described above, they are only exemplifications of concrete examples, and do not particularly limit the present invention. The design of the concrete constitutions and the like can be appropriately altered. Also, with respect to the action and effect described in the embodiments of the present invention, most appropriate action and effect generated from the present invention were enumerated only, and the action and effect by the present invention are not limited to those described in the embodiments of the present invention.

For example, the material composing the inner panel 3 is not limited to an aluminum alloy of 5000 series, 6000 series or 7000 series, and only has to be a material satisfying all of the formulae (4), (5) and (7) above.

The present application is based on Japanese Patent Application applied on March 30, 2011 (Japanese Patent Application No. 2010-076665), and the contents thereof are hereby incorporated by reference.

[Reference Signs List]

| 1 | automobile component |
| 2 | outer panel |
| 2a | flange |
| 3 | inner panel |
| 3a | flange |
| 11 | automobile component |
| 12 | outer panel |
| 13 | inner panel |
| B | flange width |
| D | eccentric compressive load |

**Claims**

1. An automobile component comprising an outer panel and an inner panel joined to each other at respective both ends, wherein
the outer panel is composed of an iron and steel material;
the inner panel includes a flange projecting to the outer side in the center; and
density $\rho$, sheet thickness t, Young's modulus E, and yield stress $\sigma y$ of a material composing the inner panel, and width B of the flange of the inner panel satisfy formulae (1), (2) and (3) below.

$$\rho \times t \leq 15.0 \ (kg/m^2) \ ...(1)$$

$$(B/t)\sqrt{\sigma y/E} \leq 1.5 \ ...(2)$$

$$E \times t^2 \times \sigma y \geq 380 \ (kN^2/mm^2) \ ...(3)$$

2. The automobile component according to claim 1, wherein material composing the inner panel is an aluminum alloy of 5000 series, 6000 series or 7000 series.

# F I G . 1

# F I G . 2

# F I G . 3

- Y-axis: MAXIMUM LOAD (FEM)/ MAXIMUM LOAD (THEORETICAL ANALYSIS)
- X-axis: BUCKLING PARAMETER

# F I G . 4

- Y-axis: MAXIMUM LOAD/MAXIMUM LOAD (REFERENCE CROSS SECTION)
- X-axis: $E \times t^2 \times \sigma y\,(kN^2/mm^2)$

<table>
<tr><td colspan="2" align="center">**INTERNATIONAL SEARCH REPORT**</td><td colspan="2">International application No.<br>PCT/JP2011/057448</td></tr>
</table>

**A.  CLASSIFICATION OF SUBJECT MATTER**
*B60R19/03*(2006.01)i, *B60J5/00*(2006.01)i, *B60R19/04*(2006.01)i, *B62D29/00*(2006.01)i

According to International Patent Classification (IPC) or to both national classification and IPC

**B.  FIELDS SEARCHED**

Minimum documentation searched (classification system followed by classification symbols)
B60R19/03, B60J5/00, B60R19/04, B62D29/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2005-343329 A  (Kobe Steel, Ltd.),<br>15 December 2005 (15.12.2005),<br>entire text; all drawings<br>(Family: none) | 1-2 |
| Y | JP 2010-049319 A  (Nippon Steel Corp.),<br>04 March 2010 (04.03.2010),<br>entire text; all drawings<br>(Family: none) | 1-2 |
| A | JP 06-171441 A  (NKK Corp.),<br>21 June 1994 (21.06.1994),<br>entire text; all drawings<br>(Family: none) | 1-2 |

☐  Further documents are listed in the continuation of Box C.        ☐  See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>    06 June, 2011 (06.06.11) | Date of mailing of the international search report<br>    14 June, 2011 (14.06.11) |
| Name and mailing address of the ISA/<br>    Japanese Patent Office | Authorized officer |
| Facsimile No. | Telephone No. |

**EP 2 554 438 A1**

REFERENCES CITED IN THE DESCRIPTION

**Patent documents cited in the description**

- JP 2002219938 A
- JP 2006088885 A
- JP 2008094353 A
- JP 2007216788 A
- JP 2005225364 A
- JP 2003129611 A
- JP 2003312404 A
- JP 2009184415 A
- JP 2009255900 A
- JP 2010076665 A